# EUROPÄISCHE PATENTSCHRIFT

(11) **EP 4 124 513 B1**
(45) Veröffentlichungstag und Bekanntmachung des Hinweises auf die Patenterteilung: **02.04.2025**
(21) Anmeldenummer: 22166662.1
(22) Anmeldetag: 05.04.2022
(51) Int. Cl.: B60R 16/03

(54) **ELEKTRISCHE VERSORGUNGSVORRICHTUNG SOWIE LANDWIRTSCHAFTLICHES ARBEITSFAHRZEUG MIT EINER SOLCHEN VERSORGUNGSVORRICHTUNG**
ELECTRICAL SUPPLY DEVICE AND AGRICULTURAL WORKING VEHICLE COMPRISING SUCH A SUPPLY DEVICE
DISPOSITIF D'ALIMENTATION ÉLECTRIQUE, AINSI QUE ENGIN DE TRAVAIL AGRICOLE DOTÉ D'UN TEL DISPOSITIF D'ALIMENTATION

(30) Priorität: 27.07.2021 DE 102021119397
(43) Veröffentlichungstag der Anmeldung: 01.02.2023
(73) Patentinhaber: CLAAS Tractor S.A.S., 78141 Vélizy-Villacoublay Cedex (FR)
(72) Erfinder: Fedde, Thomas, 33129 Delbrück (DE); Kleine, Hendrik, 33102 Paderborn (DE); Heymann, Philipp, 59519 Möhnesee Wamel (DE)
(74) Vertreter: CLAAS Gruppe

(56) Entgegenhaltungen:
- EP-A2- 1 997 686
- EP-A2- 3 145 045
- DE-A1- 102008 040 625
- US-A1- 2014 117 676
- US-B2- 9 985 499

## Beschreibung

Die vorliegende Erfindung betrifft eine Vorrichtung zur elektrischen Versorgung eines landwirtschaftlichen oder kommunalen Arbeitsfahrzeuges, insbesondere eines Traktors, und/oder an das Arbeitsfahrzeug ankoppelbarer Anbaugeräte gemäß dem Oberbegriff des Anspruches 1 sowie ein landwirtschaftliches oder kommunales Arbeitsfahrzeug mit einer solchen Vorrichtung.

Landwirtschaftliche oder kommunale Arbeitsfahrzeuge, insbesondere Traktoren, weisen in der Regel einen Antriebsmotor, der zum Antreiben des Arbeitsfahrzeugs sowie zum Betreiben von an das Arbeitsfahrzeug ankoppelbaren Anbau- bzw. Arbeitsgeräten dient. Zur Bereitstellung einer Bordnetzspannung des Arbeitsfahrzeugs weist das Arbeitsfahrzeug ferner eine sogenannte Lichtmaschine auf, die mittels des Antriebsmotors generatorisch betrieben wird, um elektrische Fahrzeugkomponenten, wie Beleuchtungseinrichtungen, eine Klimaanlage oder dergleichen, sowie etwaige an das Arbeitsfahrzeug angekoppelte Anbau- bzw. Arbeitsgeräte zu versorgen. Heutige Anbau- bzw. Arbeitsgeräte, wie beispielsweise Sämaschinen oder Düngerstreuer, benötigen elektrische Leistungsbedarfe von ca. 3 bis 7 kW. Derartige Leistungsbedarfe sind mittels der herkömmlichen Bordnetzspannungen, die in aller Regel 12 V oder 24 V betragen, jedoch nicht zu realisieren. So erreichen beispielsweise 12 V-Bordnetze mit 60 A ihre Leistungsgrenze bei maximal 1 kW Leistung, die dem Anbau- bzw. Arbeitsgerät zur Verfügung gestellt werden kann.

Um den Leistungsanforderungen heutiger Anbau- bzw. Arbeitsgeräte gerecht zu werden, ist es daher beispielsweise vorstellbar eine Hochspannungsversorgung im landwirtschaftlichen Arbeitsfahrzeug zu realisieren, die jedoch als äußerst kostenintensiv und komplex in ihrer Umsetzung gilt.

Gegenwärtig werden daher zusätzliche Niederspannungsgeneratoren bereitgestellt. Zusätzlich sind die an den Anbau- bzw. Arbeitsgeräten vorgesehenen Nebenantriebe pneumatisch und/oder hydraulisch realisiert. Die Bereitstellung von zusätzlichen Generatoren erfolgt dabei entweder unmittelbar am Arbeitsfahrzeug im Bereich des Krafthebers oder Hubwerks oder aber in Form einer externen Versorgungskomponente, die ein Bauteil des Anbau- bzw. Arbeitsgeräts darstellt.

So sind beispielsweise aus der EP 1 997 686 A2, der EP 2 726 314 B1 sowie der US 2012/315084 A1 Vorrichtungen zur elektrischen Versorgung von Anbau- bzw. Arbeitsgeräten bekannt, die jeweils im Bereich des Krafthebers oder Hubwerks eines Traktors ausgebildet sind. Die Vorrichtungen weisen jeweils einen Generator auf, der unmittelbar an die Zapfwelle des Traktors angeschlossen ist. Die Vorrichtungen weisen ferner jeweils eine Anschlusseinrichtung auf mittels der die vom Generator bereitgestellte elektrische Leistung dem Anbau- bzw. Arbeitsgerät zur Verfügung gestellt werden kann.

Gerade solche Vorrichtungen schränken jedoch die Einsatz- und Ballastierungsmöglichkeiten des Arbeitsfahrzeugs erheblich ein, da die Anbindung der Generatoren im Bereich des Krafthebers oder Hubwerks des Arbeitsfahrzeugs erfolgt. Zudem sind solche Lösungen oft nur mit einem erheblichen konstruktiven Aufwand zu realisieren und daher nicht wirtschaftlich einzusetzen. Ein weiteres Problem dieser herkömmlichen Vorrichtungen stellen Überspannungszustände dar, die bei dynamischen Lasten während des Betriebs eines an das Arbeitsfahrzeug angekoppelten Anbau- bzw. Arbeitsgeräts auftreten können, da die Generatoren die Spannung nicht stabil halten können. Treten derartige Überspannungszustände während des Betriebs auf, wird der sogenannte Schutzkleinspannungsbereich, d.h. der Spannungsbereich ≤60 V, überschritten. Ein solcher Zustand, der durch das Auftreten von hohen Spannungsspitzen gekennzeichnet ist, kann beispielsweise dann auftreten, wenn ein an das Arbeitsfahrzeug angeschlossenes Anbau- bzw. Arbeitsgerät im Betrieb unter Volllast vollständig abgeschaltet wird. Ein Überschreiten des Schutzkleinspannungsbereichs bedeutet jedoch eine Verletzung der auch für landwirtschaftliche oder kommunale Arbeitsfahrzeuge gültigen Kleinspannungsschutzrichtlinie (z.B. VDA 320, ISO x, LV 148).

Ausgehend vom vorstehend genannten Stand der Technik ist es demnach die Aufgabe der vorliegenden Erfindung, eine Vorrichtung zur elektrischen Versorgung anzugeben, die einen zuverlässigen Überspannungsschutz gewährleistet, gleichzeitig keinerlei Anbindungs- und/oder Bauraumrestriktionen schafft und wirtschaftlich einsetzbar ist.

Diese Aufgabe wird erfindungsgemäß durch die Merkmale des unabhängigen Patentanspruchs 1 gelöst, wobei vorteilhafte Weiterbildungen der erfindungsgemäßen Vorrichtung Gegenstand der entsprechenden abhängigen Patentansprüche 2 bis 11 sind.

**Demnach betrifft** die vorliegende Erfindung eine Vorrichtung zur elektrischen Versorgung eines landwirtschaftlichen oder kommunalen Arbeitsfahrzeugs, insbesondere eines Traktors, und/oder an das Arbeitsfahrzeug ankoppelbarer Anbaugeräte, wobei die Vorrichtung einen von einem Antriebsmotor des Arbeitsfahrzeugs antreibbaren Generator, insbesondere einen Niederspannungs-Generator, zum Erzeugen von elektrischer Energie und mindestens eine Anschlusseinrichtung zum Übertragen der von dem Generator im Betrieb erzeugten elektrischen Energie an das Anbaugerät aufweist. Die Vorrichtung ist durch eine dem Generator und der mindestens einen Anschlusseinrichtung zwischengeschaltete Schutzeinrichtung zum Abfangen von Spannungsspitzen in einem während eines Betriebs des Generators auftretenden Überspannungsfall gekennzeichnet, wobei die Schutzeinrichtung mindestens einen Bremschopper und mindestens einen an diesen angeschlossenen Bremswiderstand aufweist.

Die erfindungsgemäße Vorrichtung ist in der Lage die zur Versorgung des landwirtschaftlichen oder kommunalen Arbeitsfahrzeugs und etwaiger an dieses Arbeitsfahrzeug angekoppelter Anbaugeräte benötige Leistung bereitzustellen. Die dem Generator und der Anschlusseinrichtung zwischengeschaltete Schutzeinrichtung bietet gegenüber dem angeführten Stand der Technik den Vorteil, dass ein für einen Bediener und für die Funktionsfähigkeit der elektrischen Komponenten des Arbeitsfahrzeugs und/oder des Anbau- bzw. Arbeitsgeräts gefährlicher Überspannungszustand im Stromkreis zuverlässig verhindert bzw. innerhalb einer vorgegebenen Zeitspanne abgebaut wird, so dass die Kleinspannungsschutzrichtlinie stets eingehalten und auf aufwändige und kostenintensive Schutzmaßnahmen verzichtet werden kann.

Im Fall von während des Betriebs des Anbau- bzw. Arbeitsgeräts auftretenden Spannungsspitzen schaltet sich der mindestens eine Bremschopper beim Überschreiten einer definierten Einschaltschwellspannung U_{S} selbstständig zu und bindet den mindestens einen Bremswiderstand in den Stromkreis ein, wodurch im Bremswiderstand eine überschüssige Leistung P_{Ü} in Form von Wärme abgebaut wird und die auftretenden Spannungsspitzen abgebaut bzw. geglättet werden. Sobald die Einschaltschwellspannung U_{S} wieder unterschritten wird, schaltet sich der mindestens eine Bremschopper ab und der Bremswiderstand wird vom Stromkreis getrennt. Dieser Vorgang wiederholt sich bei jedem Überspannungszustand.

Gemäß einer vorteilhaften Weiterbildung der Erfindung ist der Generator als Gleichspannungsgenerator, insbesondere als 48 V-Gleichspannungsgenerator, ausgebildet.

Die Verwendung eines 48 V-Gleichspannungsgenerators ist vorteilhaft, da dieser drehzahlabhängig bis zu 10 kW elektrische Leistung bereitstellen und somit die seitens des Anbau- bzw. Arbeitsgeräts geforderten Leistungsbedarfe von ca. 3 bis 7 kW abdecken kann, gleichzeitig jedoch ein Spannungsniveau bereitstellt, das im Schutzkleinspannungsbereich, also im Bereich ≤60 V, liegt. Die Schutzkleinspannungsrichtlinie findet daher Anwendung und zusätzliche aufwändige Schutzmaßnamen können entfallen.

Gemäß einer vorteilhaften Weiterbildung der Erfindung weist die Vorrichtung einen Spannungswandler, insbesondere einen Gleichspannungswandler, DC/DC-Wandler, auf, der an den Generator angeschlossen und der dazu eingerichtet ist, ein Spannungsniveau zu erzeugen, das einer Bordnetzspannung des Arbeitsfahrzeugs, insbesondere einer 12 V-Bordnetzspannung, entspricht.

Die Verwendung eines Gleichspannungswandlers ermöglicht es einen zweiten Stromkreis auszubilden mit einem der Bordnetzspannung des Arbeitsfahrzeugs entsprechenden Spannungsniveau. Der Gleichspannungswandler wird ebenfalls vom Niederspannungsgenerator der Vorrichtung gespeist und dient der Versorgung von elektrischen Fahrzeugkomponenten, beispielsweise zum Laden einer Batterie des Arbeitsfahrzeugs.

Obwohl die Bereitstellung einer 12 V-Bordnetzspannung als bevorzugt anzusehen ist, da dieses Spannungsniveau als gängige Bordnetzspannung von landwirtschaftlichen oder kommunalen Arbeitsfahrzeugen, insbesondere von Traktoren, anzusehen ist, kann das mittels des Generators bereitgestellte 48 V-Spannungsniveaus auch auf ein 24 V-Spannungsniveau oder auf ein Spannungsniveau gewandelt werden, das ein Vielfaches von 12 V darstellt.

Gemäß einer vorteilhaften Weiterbildung der Erfindung weist die Schutzeinrichtung zwei Bremschopper und zwei Bremswiderstände auf, wobei jeweils ein Bremswiderstand an jeweils einen Bremschopper angeschlossen ist, und wobei die zwei Bremschopper parallel zueinander geschaltet sind.

Diese Ausgestaltung der Schutzeinrichtung bietet einen besonders zuverlässigen Schutz gegen Überspannungszustände, die für herkömmliche Anbau- bzw. Arbeitsgeräte eines Traktors charakteristisch sind.

Gemäß einer vorteilhaften Weiterbildung der Erfindung weist die Vorrichtung mindestens ein Halbleiterrelais, vorzugsweise zwei Halbleiterrelais, auf, das dazu eingerichtet ist, den Betriebszustand des mindestens einen Bremschoppers kontinuierlich zu überwachen, um Überlastzustände und/oder Fehlerzustände des mindestens einen Bremschoppers zu detektieren.

Zusätzlich oder alternativ hierzu kann die Vorrichtung in einer vorteilhaften Ausgestaltung mindestens einen Thermoschalter, vorzugsweise zwei Thermoschalter, aufweisen, der dazu eingerichtet ist, die Temperatur des mindestens einen Bremswiderstands kontinuierlich zu überwachen, um Überlastzustände und/oder Fehlerzustände des mindestens einen Bremswiderstands zu detektieren.

Mittels der Überwachungseinrichtungen wird sichergestellt, dass ein potentieller Ausfall oder Überlastzustand der die Schutzeinrichtung ausbildenden elektronischen Bauteile, d.h. Bremschopper und Bremswiderstand, zuverlässig und vor allem unmittelbar detektiert wird, so dass einerseits ein potentielles Sicherheitsrisiko verhindert werden kann und andererseits diesen Zustand behebende Maßnahmen ergriffen werden können.

Gemäß einer vorteilhaften Weiterbildung der Erfindung weist die Anschlusseinrichtung mindestens ein Relais, vorzugsweise zwei Relais, auf, das dazu eingerichtet ist, im Falle eines detektierten Überlastzustands und/oder Fehlerzustands des mindestens einen Bremschoppers und/oder des mindestens einen Bremswiderstands, den Stromfluss vom Generator zur Anschlusseinrichtung zumindest temporär zu unterbrechen.

Diese Ausgestaltung betrifft einen Ausfall der Schutzeinrichtung, insbesondere stellt sie eine Maßnahme zur Verhinderung eines potentiellen Sicherheitsrisikos dar, der durch diesen Ausfall bedingt wäre. Sollte die Schutzeinrichtung tatsächlich einmal unerwünschter Weise nicht ordnungsgemäß funktionieren, da ein Überlast- und/oder Fehlerzustand der Komponenten der Schutzeinrichtung vorliegt, kann ein Überspannungszustand im Stromkreis nicht kompensiert werden und es würde ein erhebliches Gefährdungspotential für den Benutzer und die elektronischen Bauteile im Stromkreis und Arbeitsfahrzeug bestehen. Damit ein solches Szenario nicht eintritt, detektieren die Überwachungseinrichtungen einen solchen Überlast- und/oder Fehlerzustand der Schutzeinrichtung und in Reaktion hierauf wird der Stromfluss zur Anschlusseinrichtung und somit zum Anbau- bzw. Arbeitsgerät mittels des Relais gestoppt.

Gemäß einer vorteilhaften Weiterbildung der Erfindung weist die Vorrichtung eine Steuereinheit aufweist, die dazu eingerichtet ist, mit den elektronischen Bauteilen der Vorrichtung zu kommunizieren, insbesondere Betriebsparameter, Daten, Signale oder dergleichen zu empfangen, zu verarbeiten und/oder zu übermitteln, um den Betrieb der elektronischen Bauteile der Vorrichtung zu steuern.

Gemäß einer vorteilhaften Weiterbildung der Erfindung ist die Steuereinheit dazu eingerichtet, im Falle eines detektierten Überlastzustands und/oder Fehlerzustands des mindestens einen Bremschoppers und/oder des mindestens einen Bremswiderstands, ein Signal zum Schalten des mindestens einen Relais der Anschlusseinrichtung zu erzeugen.

Mittels der Steuereinheit wird somit bei einem Ausfall der Schutzeinrichtung vollautomatisch der Stromfluss zum Anbaugerät unterbunden, so dass kein Gefährdungspotential für den Bediener und/oder die elektrischen Komponenten besteht. Die Steuereinheit kommuniziert mit den Überwachungseinrichtungen und empfängt bei einem Ausfall der Schutzeinrichtung Daten der Überwachungseinrichtungen, die von der Steuereinheit umgehend verarbeitet werden und auf deren Grundlage das Schaltsignal für das Relais der Anschlusseinrichtung erzeugt wird. Die intelligente Steuereinheit stellt somit eine zentrale Komponente der Vorrichtung dar, insbesondere im Fall eines Ausfalls der Schutzeinrichtung.

Gemäß einer vorteilhaften Ausgestaltung der Erfindung ist die mindestens eine Anschlusseinrichtung als Power-Distribution-Unit, PDU, insbesondere als ein Stecker mit Interlock-Funktion, ausgebildet.

Insbesondere die Ausgestaltung der Anschlusseinrichtung als Stecker mit Interlock-Funktion ist hinsichtlich der Bedienersicherheit als besonders vorteilhaft anzusehen, da hierdurch verhindert wird, dass der Bediener einem Überspannungszustand beim an- und/oder abkoppeln des Anbau- bzw. Arbeitsgeräts ausgesetzt ist.

Gemäß einer vorteilhaften Weiterbildung der Erfindung ist die Vorrichtung als Nachrüstmodul für das Arbeitsfahrzeug ausgebildet.

Diese Ausgestaltung der Vorrichtung als ein von dem Arbeitsfahrzeug autarkes Nachrüstmodul ist als dahingehend vorteilhaft anzusehen, dass auch bereits hergestellte und/oder langjährig genutzte Arbeitsfahrzeuge mit der Vorrichtung ausgestattet werden können.

Selbstverständlich ist jedoch auch eine feste Integration der Vorrichtung an ein Arbeitsfahrzeug während der Produktion möglich. In beiden Fällen muss die Vorrichtung, insbesondere der Generator, gerade nicht wie im angeführten Stand der Technik unmittelbar an die Zapfwelle des Arbeitsfahrzeugs angeschlossen werden, sondern kann an anderer Stelle im Arbeitsfahrzeug angeordnet werden und unmittelbar oder mittelbar unter Zuhilfenahme mechanischer Komponenten vom Antriebsmotor des Arbeitsfahrzeugs angetrieben werden. Dies macht eine optimale Nutzung des am Arbeitsfahrzeug vorhandenen Bauraums möglich und lässt einen wirtschaftlichen Einsatz zu.

Die erfindungsgemäße Aufgabe wird ferner durch ein landwirtschaftliches oder kommunales Arbeitsfahrzeug gemäß dem unabhängigen Patentanspruch 12 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung des erfindungsgemäßen landwirtschaftlichen oder kommunalen Arbeitsfahrzeugs, insbesondere eines Traktors, mit einer schematisch und exemplarisch dargestellten erfindungsgemäßen Vorrichtung zur elektrischen Versorgung; und
- FIG. 2: ein schematischer und exemplarischer Schaltplan der erfindungsgemäßen Vorrichtung aus FIG. 1.

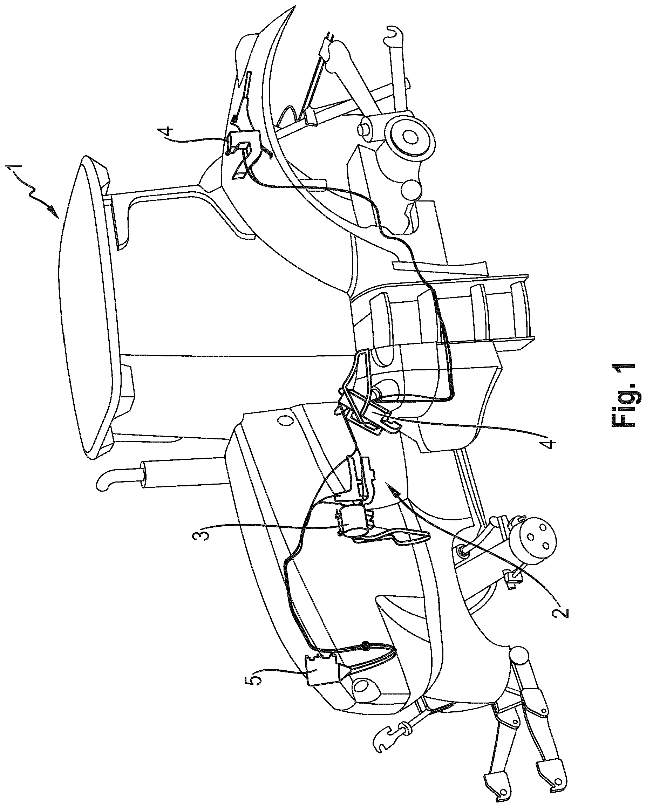

FIG. 1 zeigt eine schematische und exemplarische Darstellung eines Traktors als Beispiel eines landwirtschaftlichen oder kommunalen Arbeitsfahrzeugs. Auch wenn in FIG. 1 explizit ein Traktor dargestellt ist, versteht es sich, dass die erfindungsgemäße und nachfolgend im Detail beschriebene Vorrichtung zur elektrischen Versorgung, im Folgenden auch kurz Versorgungsvorrichtung genannt, gleichermaßen im Kontext anderer landwirtschaftlicher oder kommunaler Arbeitsfahrzeuge, wie beispielsweise Mähdrescher oder Feldhäcksler, einsetzbar ist.

Das landwirtschaftliche oder kommunale Arbeitsfahrzeug 1, im Folgenden auch kurz Arbeitsfahrzeug 1 genannt, weist einen in den FIGs. nicht dargestellten Antriebsstrang auf, der wiederum unter anderem einen in den FIGs. nicht dargestellten Antriebsmotor sowie ein nicht dargestelltes Getriebe aufweist. Der Antriebsmotor dient neben dem Antrieb des Arbeitsfahrzeugs 1 auch dem Antrieb einer Frontzapfwelle und/oder einer Heckzapfwelle, an welche jeweils wahlweise ein in den FIGs. nicht dargestelltes Anbau- bzw. Arbeitsgerät ankoppelbar ist. Ferner werden weitere Hilfsaggregate mittels des Antriebsmotors betrieben, beispielsweise eine sogenannte Lichtmaschine, die zur Bereitstellung einer Bordnetzspannung des Arbeitsfahrzeugs 1 dient, die wiederum für die Versorgung von elektrischen Verbrauchern des Arbeitsfahrzeugs 1 benötigt wird. Der Antriebsmotor kann als Verbrennungsmotor oder Elektromotor ausgebildet sein.

Die FIG. 1 zeigt weiter schematisch und exemplarisch die erfindungsgemäße Versorgungsvorrichtung 2. Die Versorgungsvorrichtung 2 weist einen Generator 3 auf, der im Betrieb der Versorgungsvorrichtung 2 vom Antriebsmotor des Arbeitsfahrzeugs 1 angetrieben wird, beispielsweise über einen zwischengeschalteten Riemen oder eine Zahnradstufe. Der Generator 3 kann jedoch auch unmittelbar von einer Motorausgangswelle angetrieben werden. Der Generator 3 ist als Gleichspannungsgenerator ausgebildet und dient vorrangig der Bereitstellung einer Versorgungsspannung, die den Betrieb der Anbau- bzw. Arbeitsgeräte gewährleistet. Wie eingangs bereits ausgeführt, erfordern heutige Anbau- bzw. Arbeitsgeräte in aller Regel Leistungsbedarfe von ca. 3 bis 7 kW Leistung, die mittels der herkömmlichen Bordnetzspannung, die bei landwirtschaftlichen oder kommunalen Arbeitsfahrzeugen in aller Regel bei 12 V oder 24 V liegt, nicht realisierbar sind. Der in der Versorgungsvorrichtung 2 verwendete Generator 3 ist daher vorzugsweise als 48 V-Gleichspannungsgenerator ausgebildet, der drehzahlabhängig zwischen 3 und 10 kW Leistung liefert, somit den Leistungsanforderungen der Anbau- bzw. Arbeitsgeräte gerecht wird.

Die Versorgungsvorrichtung 2 weist neben dem Generator 3 mindestens eine sogenannte Anschlusseinrichtung 4 auf, die elektrisch mit dem Generator 3 verbunden ist. Die mindestens eine Anschlusseinrichtung 4 ist als Power-Distribution-Unit, PDU, ausgebildet. Jede Anschlusseinrichtung 4, jedoch auch nur eine Anschlusseinrichtungen 4, sofern mehre verwendet werden, ist vorzugsweise als Stecker ausgebildet, der besonders bevorzugt über eine sogenannte Interlock-Funktion verfügt. Mittels dieser Interlock-Funktion kann eine sichere Inbetriebnahme eines an das Arbeitsfahrzeug 1 angekoppelten Anbau- bzw. Arbeitsgeräts seitens eines Benutzers sichergestellt werden. In FIG. 1 sind zwei Anschlusseinrichtungen 4 dargestellt, wobei eine der Anschlusseinrichtungen 4 als frontseitige Anschlusseinrichtung 4 ausgebildet ist, die die vom Generator 3 erzeugte elektrische Energie an ein über die Frontzapfwelle des Arbeitsfahrzeugs 1 angekoppeltes frontseitiges Anbau- bzw. Arbeitsgerät überträgt. Die zweite Anschlusseinrichtung 4 ist als heckseitige Anschlusseinrichtung 4 ausgebildet und dient der Übertragung der vom Generator 3 erzeugten elektrischen Energie an ein über die Heckzapfwelle angekoppeltes heckseitiges Anbau- bzw. Arbeitsgerät. Die Anbindung der Anbau- bzw. Arbeitsgeräte an die Anschlusseinrichtungen 4 wird über ein in den FIGs. ebenfalls nicht dargestelltes Kabel realisiert.

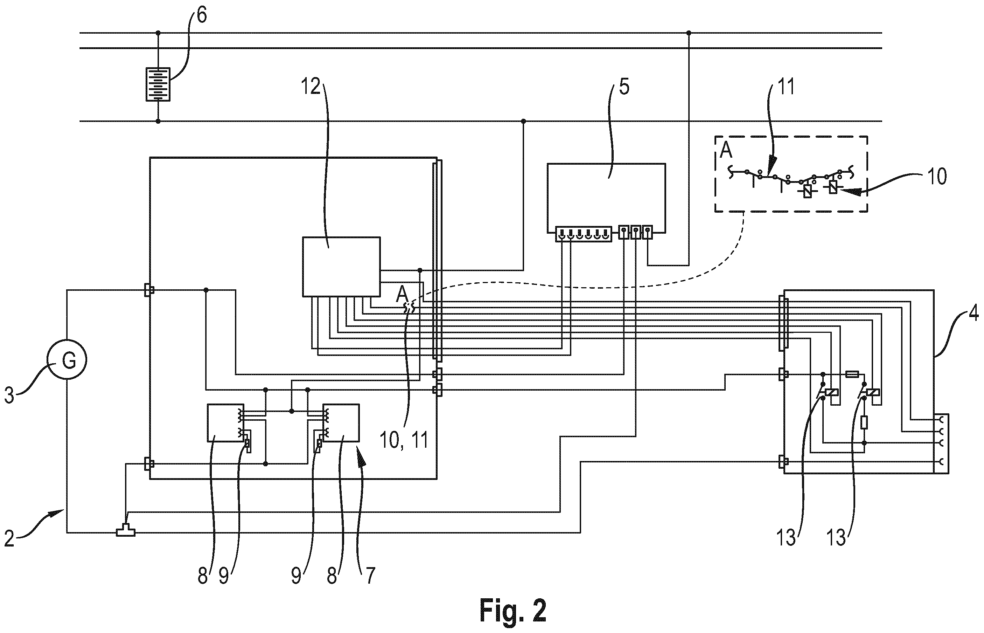

FIG. 1 zeigt, dass die Versorgungsvorrichtung 4 einen Gleichspannungswandler 5, DC/DC-Wandler, aufweist. Der Gleichspannungswandler 5 ist dazu eingerichtet, dass mittels des Generators 3 bereitgestellte Spannungsniveau, vorzugsweise das 48 V-Spannungsniveau, in ein geringeres Spannungsniveau zu wandeln. Im Rahmen der vorliegenden Erfindung wandelt der Gleichspannungswandler 5 das mittels des Generators 3 bereitgestellte Spannungsniveau auf das Bordnetzspannungsniveau des Arbeitsfahrzeugs 1, d.h. 12 V, 24 V oder ein Vielfaches von 12 V. Mittels des Gleichspannungswandlers 5 wird somit ein zweiter Stromkreis ausgebildet, der ebenfalls vom Generator 3 gespeist wird. Dieser kann zur Versorgung von fahrzeugseitigen elektrischen Verbrauchern genutzt werden. Die FIG. 2 zeigt beispielsweise, dass die mittels des Gleichspannungswandlers 5 bereitgestellte Spannung zur Versorgung einer fahrzeugseitigen Batterie 6 genutzt wird. Die Versorgung anderer fahrzeugseitiger Verbraucher ist jedoch ebenfalls vorstellbar.

Obwohl der Gleichspannungswandler 5 sowohl in FIG. 1 als auch in FIG. 2 dargestellt ist, ist diese Komponente als optionales Bauteil der Versorgungsvorrichtung 2 anzusehen. Auch könnte der Generator 3 lediglich für die Versorgung der Anbau- bzw. Arbeitsgeräte genutzt werden und kein zusätzlicher Gleichspannungswandler 5 vorgesehen sein.

FIG. 2 zeigt einen Schaltplan der erfindungsgemäßen Versorgungsvorrichtung 2. Neben den bereits in Bezug auf FIG. 1 erwähnten elektrischen Komponenten, weist die Versorgungsvorrichtung 2 als wesentliches Bauteil eine Schutzeinrichtung 7 auf. Die Schutzeinrichtung 7 wird aus mindestens einem Bremschopper 8 und mindestens einem an den Bremschopper 8 angeschlossenen Bremswiderstand 9 ausgebildet. Der in FIG. 2 dargestellte Schaltplan sieht die Verwendung zweier solcher Bremschopper 8 und Bremswiderstände 9 vor, wobei die beiden Bremschopper 8 parallelgeschaltet sind und jedem Bremschopper 8 genau ein Bremswiderstand 9 zugeordnet ist. Eine Verwendung von mehr als zwei oder weniger als zwei Bremschoppern 8 und Bremswiderständen 9 ist ebenfalls möglich.

Mittels der Schutzeinrichtung 7 kann, wie eingangs beschrieben, ein bei dynamischen Lasten während des Betriebs eines angekoppelten Anbau- bzw. Arbeitsgeräts auftretender Überspannungszustand zuverlässig vermieden werden. In diesem Zusammenhang übt der Bremschopper 8 die Funktion eines Schalters aus, der bis zu einer definierten Einschaltschwellspannung U_{S} geöffnet ist und somit den an ihn elektrisch angeschlossenen Bremswiderstand 9 vom Stromkreis entkoppelt. Beim Überschreiten der Einschaltschwellspannung U_{S} schließt der Bremschopper 8 und bindet somit den Bremswiderstand 9 in den Stromkreis ein. Die überschüssige Leistung, die im Überspannungszustand im Stromkreis auftritt, wird mittels des Bremswiderstands 9 in Form von Wärme abgebaut. Sobald die im Stromkreis herrschende Spannung wieder den Einschaltschwellspannungswert U_{S} unterschreitet, öffnet der Bremschopper 8 und entkoppelt den Bremswiderstand 9 vom Stromkreis, zumindest solange bis ein erneuter Überspannungszustand vorherrscht.

Durch die Verwendung mindestens eines Bremschoppers 8 und mindestens eines daran angeschlossenen Bremswiderstands 9 kann im Überspannungsfall mit Spannungsspitzen >60 V stets gewährleistet werden, dass die Schutzkleinspannungsrichtlinie eingehalten wird und keine Gefährdung von der Versorgungsvorrichtung 2 ausgeht. Aufwändige zusätzliche Schutzmaßnahmen zum Schutz des Benutzers und der elektronischen Bauteile im Stromkreis und/oder des Arbeitsfahrzeugs können demnach entfallen.

Damit die Funktionsfähigkeit der Schutzeinrichtung 7 stets sichergestellt ist und etwaige Ausfälle der Schutzeinrichtung 7 detektiert werden, kann sowohl der Bremschopper 8 als auch der Bremswiderstand 9 jeweils kontinuierlich von einer eigenen Überwachungseinrichtung 10, 11 überwacht werden. Die Überwachungseinrichtung 10 ist dazu eingerichtet, den Bremschopper 8 zu überwachen, die Überwachungseinrichtung 11 ist dazu eingerichtet, den Bremswiderstand 9 zu überwachen.

Der Detailausschnitt A in FIG. 2 zeigt die Ausgestaltung jeder Überwachungseinrichtung 10, 11. Die zur Überwachung des mindestens einen Bremschoppers 8 vorgesehene Überwachungseinrichtung 10 ist als mindestens ein Halbleiterrelais ausgebildet. In FIG. 2 sind zwei solcher Halbleiterrelais dargestellt, wobei sich die Anzahl der notwendigen Relais an der Anzahl der eingesetzten Bremschopper 8 orientiert. Die als mindestens ein Halbleiterrelais ausgebildete Überwachungseinrichtung 10 detektiert Überlast- und/oder Fehlerzustände des an das Halbleiterrelais angeschlossenen Bremschoppers 8, die einer ordnungsgemäßen Funktion der Schutzeinrichtung 7 entgegenstehen würden.

Die zur Überwachung des mindestens einen Bremswiderstands 9 vorgesehene Überwachungseinrichtung 11 ist als mindestens ein Thermoschalter ausgebildet, der die Temperatur des mindestens einen Bremswiderstands 9 kontinuierlich überwacht. Entsprechend der Überwachungseinrichtung 10 sind in FIG. 2 zwei solcher Thermoschalter abgebildet, wobei sich die Anzahl der notwendigen Thermoschalter ebenfalls an der Anzahl der eingesetzten Bremswiderstände 9 orientiert. Die als mindestens ein Thermoschalter ausgebildete Überwachungseinrichtung 11 detektiert Überlast- und/oder Fehlerzustände des an den Thermoschalter angeschlossenen Bremswiderstands 9, die einer ordnungsgemäßen Funktion der Schutzeinrichtung 7 entgegenstehen würden.

Es sei angemerkt, dass nicht zwingend beide Überwachungseinrichtungen 10, 11 in der Versorgungsvorrichtung 2 ausgebildet sein müssen. Vielmehr kann auch lediglich die Überwachungseinrichtung 10 für die Bremschopper 8 oder die Überwachungseinrichtung 11 für die Bremswiderstände 9 realisiert sein.

Die Versorgungsvorrichtung 2 weist ferner eine zentrale Steuereinheit 12 auf, die zumindest mit allen elektronischen Komponenten bzw. Bauteilen der Versorgungsvorrichtung 2 in Verbindung steht. Die Steuereinheit 12 kann mit jeder Komponente der Versorgungsvorrichtung 2 kommunizieren und Daten, Betriebsparameter, Signale oder dergleichen, die von diesen Komponenten generiert werden empfangen. Die Steuereinheit 12 erlaubt ferner die Verarbeitung und Übermittlung dieser Daten, Betriebsparameter, Signale oder dergleichen, um den Betrieb der Versorgungsvorrichtung 2 und daran angeschlossener Verbraucher, wie beispielsweise eines Anbau- bzw. Arbeitsgeräts, zu steuern. Demnach kommuniziert die Steuereinheit 12 auch kontinuierlich mit den Überwachungseinrichtungen 10, 11 der Versorgungsvorrichtung 2 und kann im Falle eines detektierten Überlast- und/oder Fehlerzustands der Schutzeinrichtung 7 unmittelbar reagieren.

Um in genau solchen sicherheitskritischen Situationen reagieren zu können, in denen die Überwachungseinrichtungen 10, 11 Überlast- und/oder Fehlerzustände der Schutzeinrichtung 7 detektieren, verfügt die Versorgungsvorrichtung 2 über mindestens ein zusätzliches Relais 13, das in der Anschlusseinrichtung 4 ausgebildet ist. Dieses Relais 13 ist ebenfalls mit der Steuereinheit 12 verbunden, so dass die Steuereinheit 12 mit dem mindestens einen Relais 13 kommunizieren kann. In einem von den Überwachungseinrichtungen 10, 11 detektierten Überlast- und/oder Fehlerzustand der Schutzeinrichtung 7 werden die von den Überwachungseinrichtungen 10, 11 an die Steuereinheit 12 übermittelten Daten, Betriebsparameter oder Signale von der Steuereinheit 12 verarbeitet. Basierend auf dieser Verarbeitung generiert die Steuereinheit 12 ein Signal mit dem das mindestens eine Relais 13 geschaltet wird, also von einem geschlossenen Zustand in einen geöffneten Zustand überführt wird. Hierdurch wird der Stromfluss zwischen Generator 3 und Anschlusseinrichtung 4 unterbrochen und potentielle im Betrieb der Anbau- bzw. Arbeitsgeräte auftretende Überspannungszustände vermieden, die temporär nicht von der Schutzeinrichtung 7 kompensiert werden könnten. Sobald der Überlast- und/oder Fehlerzustand der Schutzeinrichtung 7 nicht mehr vorliegt bzw. behoben ist, generiert die Steuereinheit 12 ein weiteres zweites Signal, wodurch das mindestens eine Relais 13 erneut geschaltet wird, also wieder schließt, und der unterbrochene Stromfluss zwischen Generator 3 und Anschlusseinrichtung 4 wiederhergestellt wird.

Erfindungsgemäß ist vorgesehen, dass die Versorgungsvorrichtung 2 ein Modul eines landwirtschaftlichen Arbeitsfahrzeugs 1 bildet. Hierbei ist es einerseits möglich, dass die Versorgungsvorrichtung 2 bereits bei der Herstellung des Arbeitsfahrzeugs 1 als Komponente des Arbeitsfahrzeugs 1 verbaut wird. Andererseits kann die Versorgungsvorrichtung 2 jedoch auch als Nachrüstmodul ausgebildet sein, so dass Arbeitsfahrzeuge 1 unkompliziert mit der Versorgungsvorrichtung 2 nachgerüstet werden können.

Erfindungsgemäß ist es vorgesehen, dass die Versorgungsvorrichtung 2 als Ersatz einer herkömmlichen Lichtmaschine dienen oder aber ergänzend hierzu vorgesehen sein kann. Im Übrigen sei angemerkt, dass der Generator 3 auch als Wechselspannungsgenerator mit integrierter Gleichrichtereinrichtung ausgebildet sein kann.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Arbeitsfahrzeug
- 2: Versorgungsvorrichtung
- 3: Generator
- 4: Anschlusseinrichtung
- 5: Gleichspannungswandler
- 6: Batterie
- 7: Schutzeinrichtung
- 8: Bremschopper
- 9: Bremswiderstand
- 10: Überwachungseinrichtung
- 11: Überwachungseinrichtung
- 12: Steuereinheit
- 13: Relais

## Patentansprüche

1. Vorrichtung (2) zur elektrischen Versorgung eines landwirtschaftlichen oder kommunalen Arbeitsfahrzeugs (1), insbesondere eines Traktors, und/oder an das Arbeitsfahrzeug (1) ankoppelbarer Anbaugeräte, wobei die Vorrichtung (2) einen von einem Antriebsmotor des Arbeitsfahrzeugs (1) antreibbaren Generator (3), insbesondere einen Niederspannungs-Generator, zum Erzeugen von elektrischer Energie und mindestens eine Anschlusseinrichtung (4) zum Übertragen der von dem Generator (3) im Betrieb erzeugten elektrischen Energie an das Anbaugerät aufweist, **dadurch gekennzeichnet, dass** die Vorrichtung (2) eine dem Generator (3) und der mindestens einen Anschlusseinrichtung (4) zwischengeschaltete Schutzeinrichtung (7) zum Abfangen von Spannungsspitzen in einem während eines Betriebs des Generators (3) auftretenden Überspannungsfall aufweist, wobei die Schutzeinrichtung (7) mindestens einen Bremschopper (8) und mindestens einen an diesen angeschlossenen Bremswiderstand (9) aufweist.

2. Vorrichtung (2) nach Anspruch 1, **dadurch gekennzeichnet, dass** der Generator (3) als Gleichspannungsgenerator, insbesondere als 48V-Gleichspannungsgenerator, ausgebildet ist.

3. Vorrichtung (2) nach Anspruch 1 oder 2, **dadurch gekennzeichnet, dass** die Vorrichtung einen Spannungswandler (5), insbesondere einen Gleichspannungswandler, DC/DC-Wandler, aufweist, der an den Generator (3) angeschlossen ist und der dazu eingerichtet ist, ein Spannungsniveau zu erzeugen, das einer Bordnetzspannung des Arbeitsfahrzeugs (1), insbesondere einer 12V-Bordnetzspannung, entspricht.

4. Vorrichtung (2) nach einem der Ansprüche 1 bis 3, **dadurch gekennzeichnet, dass** die Schutzeinrichtung (7) zwei Bremschopper (8) und zwei Bremswiderstände (9) aufweist, wobei jeweils ein Bremswiderstand (9) an jeweils einen Bremschopper (8) angeschlossen ist, und wobei die zwei Bremschopper (8) parallel zueinander geschaltet sind.

5. Vorrichtung (2) nach einem der Ansprüche 1 bis 4, **dadurch gekennzeichnet, dass** die Vorrichtung (2) mindestens ein Halbleiterrelais, vorzugsweise zwei Halbleiterrelais, aufweist, das dazu eingerichtet ist, den Betriebszustand des mindestens einen Bremschoppers (8) kontinuierlich zu überwachen, um Überlastzustände und/oder Fehlerzustände des mindestens einen Bremschoppers (8) zu detektieren.

6. Vorrichtung (2) nach einem der Ansprüche 1 bis 5, **dadurch gekennzeichnet, dass** die Vorrichtung (2) mindestens einen Thermoschalter, vorzugsweise zwei Thermoschalter, aufweist, der dazu eingerichtet ist, die Temperatur des mindestens einen Bremswiderstands (9) kontinuierlich zu überwachen, um Überlastzustände und/oder Fehlerzustände des mindestens einen Bremswiderstands (9) zu detektieren.

7. Vorrichtung (2) nach Anspruch 5 oder 6, **dadurch gekennzeichnet, dass** die Anschlusseinrichtung (4) mindestens ein Relais (13), vorzugsweise zwei Relais (13), aufweist, das dazu eingerichtet ist, im Falle eines detektierten Überlastzustands und/oder Fehlerzustands des mindestens einen Bremschoppers (8) und/oder des mindestens einen Bremswiderstands (9), den Stromfluss vom Generator (3) zur Anschlusseinrichtung (4) zumindest temporär zu unterbrechen.

8. Vorrichtung (2) nach einem der vorangehenden Ansprüche, **dadurch gekennzeichnet, dass** die Vorrichtung (2) eine Steuereinheit (12) aufweist, die dazu eingerichtet ist, mit den elektrischen Komponenten der Vorrichtung (2) zu kommunizieren, insbesondere Betriebsparameter, Daten, Signale oder dergleichen zu empfangen, zu verarbeiten und/oder zu übermitteln, um den Betrieb der elektrischen Komponenten der Vorrichtung (2) zu steuern.

9. Vorrichtung (2) nach Anspruch 8 in Kombination mit Anspruch 7, **dadurch gekennzeichnet, dass** die Steuereinheit (12) dazu eingerichtet ist, im Falle eines detektierten Überlastzustands und/oder Fehlerzustands des mindestens einen Bremschoppers (8) und/oder des mindestens einen Bremswiderstands (9), ein Signal zum Schalten des mindestens einen Relais (13) der Anschlusseinrichtung (4) zu erzeugen.

10. Vorrichtung (2) nach einem der vorangehenden Ansprüche, **dadurch gekennzeichnet, dass** die mindestens eine Anschlusseinrichtung (4) als Power-Distribution-Unit, PDU, insbesondere als ein Stecker mit Interlock-Funktion, ausgebildet ist.

11. Vorrichtung (2) nach einem der vorangehenden Ansprüche, **dadurch gekennzeichnet, dass** die Vorrichtung (2) als Nachrüstmodul für das Arbeitsfahrzeug (1) ausgebildet ist.

12. Landwirtschaftliches oder kommunales Arbeitsfahrzeug (1), insbesondere Traktor, mit einer Vorrichtung (2) **dadurch gekennzeichnet, dass** die Vorrichtung (2) nach einem der Ansprüche 1 bis 11 ausgebildet ist.

## Claims

1. Electrical supply equipment (2) for an agricultural or municipal working vehicle (1), in particular a tractor, and/or attachments which can be coupled to the working vehicle (1), wherein the equipment (2) has a generator (3) for generating electrical energy, in particular a low voltage generator, which can be driven by a propulsion engine of the working vehicle (1), and at least one connection device (4) for transmitting the electrical energy generated by the generator (3) during operation to the attachment,
**characterized in that** the equipment (2) has a protection device (7) interposed between the generator (3) and the at least one connection device (4) for intercepting voltage spikes in the event of a surge occurring during an operation of the generator (3), wherein the protection device (7) has at least one braking chopper (8) and at least one braking resistor (9) connected thereto.

2. The equipment (2) according to claim 1, **characterized in that** the generator (3) is configured as a constant voltage generator, in particular as a 48V constant voltage generator.

3. The equipment (2) according to claim 1 or claim 2, **characterized in that** the equipment has a voltage converter (5), in particular a constant voltage converter, DC/DC converter, which is connected to the generator (3) and which is configured to generate a voltage level which corresponds to an electrical supply voltage of the working vehicle (1), in particular to a 12V electrical supply voltage.

4. The equipment (2) according to one of claims 1 to 3, **characterized in that** the protection device (7) has two braking choppers (8) and two braking resistors (9), wherein one respective braking resistor (9) is connected to one respective braking chopper (9), and wherein the two braking choppers (8) are connected together in parallel.

5. The equipment (2) according to one of claims 1 to 4, **characterized in that** the equipment (2) has at least one solid state relay, preferably two solid state relays, configured to monitor the operating state of the at least one braking chopper (8) continuously in order to detect overload states and/or error states of the at least one braking chopper (8).

6. The equipment (2) according to one of claims 1 to 5, **characterized in that** the equipment (2) has at least one thermal switch, preferably two thermal switches, configured to monitor the temperature of the at least one braking resistor (9) continuously in order to detect overload states and/or error states of the at least one braking resistor (9).

7. The equipment (2) according to claim 5 or claim 6, **characterized in that** the connection device (4) has at least one relay (13), preferably two relays (13), configured to interrupt the flow of current from the generator (3) to the connection device (4) at least temporarily in the event of a detected overload state and/or error state of the at least one braking chopper (8) and/or of the at least one braking resistor (9).

8. The equipment (2) according to one of the preceding claims, **characterized in that** the equipment (2) has a control unit (12) which is configured to communicate with the electrical components of the equipment (2), in particular to receive, process and/or transmit operating parameters, data, signals or the like, in order to control the operation of the electrical components of the equipment (2).

9. The equipment (2) according to claim 8 in combination with claim 7, **characterized in that** the control unit (12) is configured to generate a signal for switching the at least one relay (13) of the connection device (4) in the event of a detected overload state and/or error state of the at least one braking chopper (8) and/or of the at least one braking resistor (9).

10. The equipment (2) according to one of the preceding claims, **characterized in that** the at least one connection device (4) is configured as a power distribution unit, PDU, in particular as a plug with an interlock function.

11. The equipment (2) according to one of the preceding claims, **characterized in that** the equipment (2) is configured as an upgrade module for the working vehicle (1).

12. An agricultural or municipal working vehicle (1), in particular a tractor, with equipment (2), **characterized in that** the equipment (2) is configured in accordance with one of claims 1 to 11.

## Revendications

1. Dispositif (2) destiné à l'alimentation électrique d'un engin de travail (1) agricole ou communal, en particulier d'un tracteur, et/ou d'outils attelés pouvant être accouplés à l'engin de travail (1), le dispositif (2) présentant un générateur (3) pouvant être entraîné par un moteur d'entraînement de l'engin de travail (1), notamment un générateur basse tension, destiné à produire de l'énergie électrique, et au moins un dispositif de raccordement (4) destiné à transmettre à l'outil attelé l'énergie électrique produite par le générateur (3) lors du fonctionnement, **caractérisé en ce que** le dispositif (2) présente un dispositif de protection (7) qui est intercalé entre le générateur (3) et le dispositif de raccordement (4), au nombre d'au moins un, et est destiné à absorber les pics de tension en cas de surtension se produisant pendant un fonctionnement du générateur (3), le dispositif de protection (7) comportant au moins un hacheur de freinage (8) et au moins une résistance de freinage (9) raccordée à celui-ci.

2. Dispositif (2) selon la revendication 1, **caractérisé en ce que** le générateur (3) est réalisé sous forme de générateur à tension continue, notamment de générateur à tension continue 48V.

3. Dispositif (2) selon la revendication 1 ou 2, **caractérisé en ce que** le dispositif présente un transformateur de tension (5), notamment un transformateur de tension continue, transformateur CC/CC, qui est raccordé au générateur (3) et qui est conçu pour générer un niveau de tension correspondant à une tension de réseau de bord de l'engin de travail (1), notamment à une tension de réseau de bord de 12 V.

4. Dispositif (2) selon une des revendications 1 à 3, **caractérisé en ce que** le dispositif de protection (7) présente deux hacheurs de freinage (8) et deux résistances de freinage (9), sachant qu'une résistance de freinage (9) est raccordée respectivement à un hacheur de freinage (8), et les deux hacheurs de freinage (8) sont montés en parallèle l'un à l'autre.

5. Dispositif (2) selon une des revendications 1 à 4, **caractérisé en ce que** le dispositif (2) présente au moins un relais à semi-conducteurs, de préférence deux relais à semi-conducteurs, qui est conçu pour surveiller en continu l'état de fonctionnement du hacheur de freinage (8), au nombre d'au moins un, aux fins de détecter des états de surcharge et/ou des états d'erreur de la résistance de freinage (9), au nombre d'au moins une.

6. Dispositif (2) selon une des revendications 1 à 5, **caractérisé en ce que** le dispositif (2) présente au moins un thermorupteur, de préférence deux thermorupteurs, qui est conçu pour surveiller en continu la température de la résistance de freinage (9), au nombre d'au moins une, aux fins de détecter des états de surcharge et/ou des états d'erreur de la résistance de freinage (9), au nombre d'au moins une.

7. Dispositif (2) selon la revendication 5 ou 6, **caractérisé en ce que** le dispositif de raccordement (4) présente au moins un relais (13), de préférence deux relais (13), qui est conçu pour interrompre au moins temporairement le flux de courant depuis le générateur (3) jusqu'au dispositif de raccordement (4), en cas d'état de surcharge et/ou d'état d'erreur détecté du hacheur de freinage (8), au nombre d'au moins un, et/ou de la résistance de freinage (9), au nombre d'au moins une.

8. Dispositif (2) selon une des revendications précédentes, **caractérisé en ce que** le dispositif (2) présente une unité de commande (12) qui est conçue pour communiquer avec les composants électriques du dispositif (2), notamment pour recevoir, traiter et/ou transmettre des paramètres de fonctionnement, des données, des signaux ou des éléments analogues, aux fins de commander le fonctionnement des composants électriques du dispositif (2).

9. Dispositif (2) selon la revendication 8 en combinaison avec la revendication 7, **caractérisé en ce que** l'unité de commande (12) est conçue pour produire un signal destiné à commuter le relais (13), au nombre d'au moins un, du dispositif de raccordement (4), en cas d'un état de surcharge et/ou d'un état d'erreur détecté du hacheur de freinage (8), au nombre d'au moins un, et/ou de la résistance de freinage (9), au nombre d'au moins une.

10. Dispositif (2) selon une des revendications précédentes, **caractérisé en ce que** le dispositif de raccordement (4), au nombre d'au moins un, est réalisé sous forme d'unité de distribution d'alimentation, PDU, notamment comme fiche à fonction de blocage.

11. Dispositif (2) selon une des revendications précédentes, **caractérisé en ce que** le dispositif (2) est réalisé comme module d'équipement ultérieur pour l'engin de travail (1).

12. Engin de travail (1) agricole ou communal, en particulier tracteur, comprenant un dispositif (2), **caractérisé en ce que** le dispositif (2) est réalisé conformément à une des revendications 1 à 11.
